# EUROPÄISCHE PATENTSCHRIFT

(11) **EP 1 590 052 B1**
(45) Veröffentlichungstag und Bekanntmachung des Hinweises auf die Patenterteilung: **21.06.2006**
(21) Anmeldenummer: 04708344.9
(22) Anmeldetag: 05.02.2004
(51) Int. Cl.: A63C 5/12, A63C 5/056

(54) **GLEITBELAG FÜR WINTERSPORTGERÄTE**
SLIDING COATING FOR WINTER SPORTS EQUIPMENT
REVETEMENT DE GLISSEMENT POUR APPAREILS DE SPORT D'HIVER

(30) Priorität: 07.02.2003 DE 10305088
(43) Veröffentlichungstag der Anmeldung: 02.11.2005
(73) Patentinhaber: Felix, Florian, 82467 Garmisch-Partenkirchen (DE); Hoffmann, Xaver, 82467 Garmisch-Partenkirchen (DE)
(72) Erfinder: Felix, Florian, 82467 Garmisch-Partenkirchen (DE); Hoffmann, Xaver, 82467 Garmisch-Partenkirchen (DE)
(74) Vertreter: Best, Michael
(86) Internationale Anmeldenummer: PCT/EP2004/001078
(87) Internationale Veröffentlichungsnummer: WO 2004/069352

(56) Entgegenhaltungen:
- EP-A- 0 461 966
- FR-A- 2 261 790
- FR-A- 2 697 440
- US-A- 5 069 976

## Beschreibung

Die Erfindung betrifft einen Gleitbelag für Wintersportgeräte, insbesondere für Ski und Snowboards. Der Gleitbelag kann aus einer Polymermasse auf einfache Art und Weise extrudiert werden. Die Erfindung betrifft ferner die mit dem Gleitbelag beschichteten Wintersportgeräte.

Die Qualität von Wintersportgeräten, die zum Gleiten z.B. auf Schnee bestimmt sind, insbesondere von Ski und von Snowboards, wird zu einem großen Teil von ihren Gleiteigenschaften bestimmt. Daher weisen derartige Wintersportgeräte in der Regel eine Gleitbeschichtung auf, die die Gleiteigenschaften der Geräte auf Schnee verbessern soll. Eine derartige Gleitbeschichtung besteht im wesentlichen aus einer Folie, die mit Hilfe geeigneter Kleber auf die Ski bzw. die Snowboards aufgeklebt wird. Eine solche Gleitbeschichtung sollte möglichst hydrophob sein, um eine gute Gleitung zu gewährleisten:

Aufgrund seiner hervorragenden Gleiteigenschaften über ein sehr breites Spektrum von verschiedenen Schneearten wurde als Material für die Gleitbeschichtung zunächst Niederdruckpolyethylen verwendet (CH-A 601394), das aber Probleme mit der mechanischen Beanspruchbarkeit und der Verschleißfestigkeit aufweist. Diese Probleme werden durch die Verwendung von höchstmolekularem Polyethylen (PE-UHMW) gelöst, allerdings können Beschichtungen aus PE-UHMW nicht durch Extrusion hergestellt werden, sondern müssen aufwendig z.B. durch Verpressen, Sintern und anschließendes Abschälen hergestellt werden (CH-A 601394).

Es gibt eine Reihe von Vorschlägen, diese Probleme zu lösen und die Gleitbeläge zu verbessern, beispielsweise durch Verwendung eines durch Extrusion erhältlichen vernetzen Polymers auf Polyethylenbasis (CH-A 601394) oder durch den Einschluß von wasserlöslichen Verbindungen in den Gleitbelag (CH-A 601392). Eine neuere Entwicklung schlägt einen Gleitbelag aus Polytetrafluorethylen vor (AT-B 394 951), was allerdings schon aus Kostengründen wenig vorteilhaft ist und darüber hinaus die Probleme der Gleitbeläge für Wintersportgeräte nicht ausreichend löst. Keiner dieser Vorschläge hat sich in der Praxis durchgesetzt, und moderne Ski bzw. Snowboards weisen in der Regel eine Gleitbeschichtung aus PE-UHMW auf, das aufgrund des hohen Kristallinitätsgrads die höchste mechanische und chemische Beständigkeit der Polyethylene aufweist. Dieses Polyethylen wurde ursprünglich in der Medizintechnik zur Herstellung von Hüftgelenken verwandt und wird unter Verwendung üblicher Antistatika und Gleitmittel pulverförmig wie Duroplaste in Preß- und Sinterverfahren verarbeitet.

Andere Polyolefine, wie Polypropylen, wurden bislang als ungeeignet für Gleitbeläge für Wintersportgeräte angesehen, da sie keine vorteilhaften Gleiteigenschaften aufzeigen.

Gleitbeläge mit einem Copolymer aus Propylen und Ethylen sind auch offenbart (FR-A-2261790).

Es ist auch bekannt, die Gleiteigenschaften von Gleitbelägen dadurch zu verbessern, daß eine Oberflächenstruktur aufgebracht wird, die die hydrophoben Eigenschaften des Belags nochmals verbessert. Eine Schwierigkeit besteht allerdings darin, daß der Effekt der Oberflächenstruktur nicht mehr auftritt, wenn die Struktur beispielsweise durch geringfügige mechanische Einflüsse im Laufe des Gebrauchs beschädigt wird.

Die Gleitfähigkeit von Skiern wird auch durch die Verwendung von speziellen Wachsen verbessert, die üblicherweise auch bei mit einer Gleitbeschichtung versehenen Skiern noch erforderlich ist. Der Grund für die Verwendung von Wachsen liegt einerseits darin daß sie die hydrophoben Eigenschaften der Gleitbeschichtung verbessern und andererseits darin, daß Polyethylen, wie fast alle Kunststoffe, seine Oberflächenhärte in einem Temperaturbereich von circa + 20 bis - 20°C praktisch nicht ändert, während sich die Gleiteigenschaften des Schnees temperaturbedingt ändern. Entsprechend werden Wachse verwendet, die durch verschiedenste Additive für die verschiedenen Temperaturen und Schneearten ausgelegt sind, wobei bei tieferen Schneetemperaturen eine härtere Oberfläche gewünscht ist und bei höheren Schneetemperaturen eine weichere Oberfläche. Darüber hinaus sind auch Wachse erhältlich, die neben der Einstellung der Oberflächenhärte Nanostrukturen ausbilden, die einen Lotuseffekt hervorrufen und somit eine völlig unbenetzbare Oberfläche gewährleisten. Allerdings ist die Verwendung von Wachsen aufwendig und die richtige Auswahl eines Wachses schwierig. In der Praxis müssen mehrere Wachse vorrätig gehalten werden, um auf unterschiedliche Schneebedingungen angemessen reagieren zu können.

Es besteht allerdings ein Bedarf nach einem besseren Gleitbelag für Wintersportgeräte, der einfach hergestellt werden kann und der gegenüber den bekannten, auf Polyethylen basierenden Belägen, verbesserte Eigenschaften, insbesondere Gleiteigenschaften, aufweist. Insbesondere besteht Bedarf nach einem Belag, mit dem Gleiteigenschaften erzielt werden können, die ansonsten nur durch Verwendung von speziellen Wachsen möglich sind, so daß auf die Verwendung von Wachsen weitgehend oder vollständig verzichtet werden kann. Die Wintersportgeräte sollen kostengünstig herzustellen sein.

Erfindungsgemäß wird ein Gleitbelag für ein Wintersportgerät zur Verfügung gestellt, der ein spezielles Gemisch aus zwei Copolymeren aufweist, die im folgenden als Copolymer (I) und als Copolymer (II) bezeichnet werden. Die Erfindung betrifft ebenfalls Wintersportgeräte, insbesondere Skier, die mit einem derartigen Gleitbelag ausgestattet sind.

Copolymer (1) ist ein Copolymer aus Propylen und zumindest einem weiteren Olefin, das zumindest zu 50% aus Gerüstbausteinen besteht, die von Propylenmonomeren stammen, bezogen auf die Gesamtzahl der Gerüstbausteine. In der Regel machen diese Gerüstbausteine aber nicht mehr als 99% des Copolymers aus, bezogen auf die Gesamtzahl der Gerüstbausteine. Bevorzugt besteht das Copolymer (I) aus 70 bis 99%, stärker bevorzugt aus 75 bis 98%, insbesondere aus 80 bis 95%, beispielsweise aus circa 90% aus Gerüstbausteinen, die von Propylenmonomeren herrühren (jeweils bezogen auf die Gesamtzahl der Gerüstbausteine).

Das Copolymer (I) enthält darüber hinaus noch Gerüstbausteine, die von zumindest einem weiteren Olefin herstammen, bevorzugt von Ethylen. Der Anteil des weiteren Olefins (der weiteren Olefine) macht den Rest des Copolymers (I) aus (zu 100% der Gerüstbausteine), so daß es sich bei dem Copolymer (I) bevorzugt um ein Propylen-/Ethylencopolymer handelt, dessen Gehalt an Gerüstbausteinen aus Propylen wie vorstehend definiert ist und bei dem die von Ethylen stammenden Gerüstbausteine jeweils den Rest des Copolymers ausmachen. Statt eines reinen Propylen-/Ethylencopolymers kann bevorzugt auch ein Ethylen-/Propylen-Dien-terpolymer (EPDM) verwendet werden, das neben Propylen und Ethylen auch noch Diene wie Cyclooctadien, Dicyclopentadien und/oder Hexadien enthalten kann. Es ist ebenfalls möglich, daß höhere Olefine oder Diene in dem Copolymer vorhanden sind. Auch in diesem Fall ist der Anteil an Gerüstbausteinen in dem Copolymer (I), die von Propylen herstammen, wie vorstehend beschrieben, während die von Ethylen oder anderen Olefinen und dem oder den Dienen herstammenden Gerüstbausteine des Copolymers den Rest ausmachen.

Die erfindungsgemäß am stärksten bevorzugten Copolymere (I) sind kommerziell erhältlich, beispielsweise von der Firma Exxon Mobil unter der Bezeichnung PP 7011L1.

Das Copolymer (I) macht bevorzugt 10 bis 99 Gew.-%, stärker bevorzugt 10 bis 90 Gew.-%, insbesondere 50 bis 90 Gew.-%, z.B. 50 bis 80 Gew.-% oder 60 bis 80 Gew.-%, z.B. circa 80 Gew.-% oder ca. 70 Gew.-%, des Gemischs der Copolymere (I) und (II) aus.

Der zweite wesentliche Bestandteil in dem Copolymerengemisch ist das Copolymer (II), bei dem es sich um ein Copolymer aus Ethylen und zumindest einem weiteren Olefin handelt, das mindestens 50% Gerüstbausteine enthält, die von Ethylen herstammen (bezogen auf die Gesamtzahl der Gerüstbausteine). Das Copolymer (II) enthält in der Regel nicht mehr als 99% Gerüstbausteine, die von Ethylen herstammen, und insbesondere weist es 70 bis 99% von Ethylen herstammende Gerüstbausteine auf, stärker bevorzugt 75 bis 98%, insbesondere von 80 bis 95%, beispielsweise circa 90%, jeweils bezogen auf die Gesamtzahl der Gerüstbausteine. Das Copolymer (II) enthält darüber hinaus auch Gerüstbausteine, die von zumindest einem weiteren Olefin herstammen, bevorzugt von einem Olefin mit 4 bis 10 Kohlenstoffatomen, insbesondere von 6 bis 10 Kohlenstoffatomen, am stärksten bevorzugt von Octen.

Erfindungsgemäß ebenfalls bevorzugt ist es, daß das Copolymer (II) noch Bausteine enthält, die von einem Dien oder mehreren Dienen herstammen, wie sie aus den EPDM-Kautschuken bekannt sind. Auf jeden Fall ist im Copolymer (II) der Anteil von Bausteinen, die von Ethylen herrühren, wie vorstehend definiert, während die übrigen von weiteren Olefinen oder Dienen herstammenden Bausteine den Rest des Copolymers (II) ausmachen. Die bevorzugten erfindungsgemäß einsetzbaren Copolymere (II) sind kommerziell erhältlich, beispielsweise von der Firma Dexplasiomer unter der Bezeichnung Exact 0203 bzw. Exact Octene-1 Plastomer.

Das Copolymer (II) macht bevorzugt 1 bis 90 Gew.-%, stärker bevorzugt 10 bis 90 Gew.-%, insbesondere 10 bis 50 Gew.-%, z.B. 20 bis 50 Gew.-% oder 20 bis 40 Gew.-%, beispielsweise etwa 20 Gew.-% oder etwa 30 Gew.-% des Gemischs der Copolymere (1) und (II) aus.

Bevorzugt handelt es sich sowohl beim Copolymer (I) als auch beim Copolymer (II) um "Random"-Copolymere. Der Begriff "Copolymere", wie er im Rahmen dieser Beschreibung verwendet wird, umfaßt nicht nur Copolymere aus zwei Monomereinheiten, sondern auch Copolymere, die aus mehr als zwei verschiedenen Monomereinheiten, insbesondere aus drei verschiedenen Monomereinheiten oder aus vier verschiedenen Monomereinheiten, aufgebaut sind. Der Begriff "Copolymere", wie er hier verwendet wird, umfaßt damit insbesondere auch Terpolymere. Der Begriff "Olefin", wie er hier verwendet wird, schließt Verbindungen mit einer oder mehreren Doppelbindungen, vorzugsweise mit einer oder zwei Doppelbindungen (Diene), ein, die bevorzugt nicht mehr als 16, stärker bevorzugt nicht mehr als 10 Kohlenstoffatome enthalten und die verzweigt oder unverzeigt sein können.

Vorteilhafterweise enthält das Copolymergemisch zur Herstellung des erfindungsgemäßen Gleitbelags noch ein an sich bekanntes, für Polypropylene geeignetes Gleitmittel. Sofern das Gleitmittel vorhanden ist, ist es bevorzugt in einer Menge von 0,1 bis 30 Gew.-% oder von 5 bis 30 Gew.-%, stärker bevorzugt in einer Menge von 0,5 bis 10 Gew.-% oder von 1 bis 10 Gew.-%, z.B. in einer Menge von etwa 1 Gew.-% oder von etwa 3 Gew.-%, bezogen auf das Gesamtgewicht des Gemischs aus Copolymer (I) und Copolymer (II), vorhanden. Besonders bevorzugt handelt es sich bei dem Gleitmittel um ein übliches hydrophobes Gleitmittel z.B. auf der Basis von hochtemperaturstabilen Primär- oder Sekundärfettsäuren, wie Primärfettsäureaminen, oder um Carbonsäureester. Besonders bevorzugt ist auch ein Gemisch aus einem Gleitmittel auf Basis von hochtemperaturstabilen Primärfettsäuren mit einem oder mehreren Carbonsäureestern. Übliche Handelsprodukte sind die Produkte Hecoslip 103 PO und Hecoslip 114 PP der Hecoplast GmbH (Iserlohn, Deutschland). Besonders bevorzugt wird ein Gemisch aus einer hochtemperaturstabilen Primärfettsäure und einem Carbonsäureester in einem Verhältnis von etwa 1:2 eingesetzt.

Weiterhin können die Copolymergemische zur Herstellung der erfindungsgemäßen Gleitbeläge noch übliche Antistatika enthalten, insbesondere die für Polypropylen bekannten Antistatikadditive wie Carbonsäureester. Derartige Antistatika, falls sie vorhanden sind, sind bevorzugt in einer Menge von 0,1 bis 30 Gew.-% oder 5 bis 30 Gew.-%, stärker bevorzugt von 0,5 bis 10 Gew.-%, beispielsweise in einer Menge von etwa 1 Gew.-%, bezogen auf das Gesamtgewicht des Gemischs aus Copolymer (I) und Copolymer (II), vorhanden.

Des Weiteren können die Copolymergemische zur Herstellung der erfindungsgemäßen Gleitbeläge noch übliche Nukleierungsmittel beinhalten, insbesondere für Polypropylen gebräuchliche Nukleierungsmittel. Nukleierungsmittel sind Keimbildner wie Natriumbenzoat, die erstmals in den 60er Jahren vorgestellt wurden und die z.B. von der Firma Henkel KGaA (Düsseldorf, Deutschland) oder der Hecoplast GmbH (Iserlohn, Deutschland) erhältlich sind. Bevorzugt sind erfindungsgemäß organische Nukleierungsmittel wie Nukleierungsmittel auf Zuckerbasis, wie Sorbitolacetale. Ein bevorzugtes Handelsprodukt ist das Produkt Heconuk 484PP der Firma Hecoplast. Derartige Nukleierungsmittel, falls sie vorhanden sind, sind bevorzugt in einer Menge von 0,1 bis 30 Gew.-%, stärker bevorzugt von 0,5 bis 10 Gew.-%, beispielsweise in einer Menge von etwa 2 Gew.-%, bezogen auf das Gewicht des Copolymers (I) vorhanden.

In einer bevorzugten Ausführungsform der Erfindung enthalten die Copolymergemische zur Herstellung der erfindungsgemäßen Gleitbeläge sowohl zumindest ein Nukleierungsmittel wie vorstehend definiert und zumindest ein Gleitmittel wie vorstehend definiert, jeweils in den vorstehend angegebenen bevorzugten Mengen. Bevorzugt ist auch, daß das Gleitmittel teils oder ganz an das Nukleierungsmittel gebunden ist. Falls ein Nukleierungsmittel vorhanden ist, wird als Gleitmittel bevorzugt Primärfettsäuren und/oder Sekundärfettsäuren eingesetzt, bevorzugt mit einem Anteil von 1 bis 90 Gew. % bezogen auf das Gesamtgewicht des Nukleierungsmittels, stärker bevorzugt mit einem Anteil von 1 bis 10 Gew. % bezogen auf das Gesamtgewicht des Nukleierungsmittels, insbesondere mit einem Anteil von etwa 7 Gew. % bezogen auf das Gesamtgewicht des Nukleierungsmittels.

In der bevorzugten Ausführungsform, in der das bevorzugte Copolymergemisch sowohl ein Nukleierungsmittel als auch ein Gleitmittel enthält, das gegebenenfalls oder (bevorzugt) teilweise an das Nukleierungsmittel gebunden ist, wird als Gleitmittel besonders bevorzugt ein Gemisch aus einer hochtemperaturstabilen Primärfettsäure und einem Carbonsäureester in einem Verhältnis von etwa 1:10 eingesetzt.

Auch weitere übliche Zusatzstoffe können in dem Copolymergemisch zur Herstellung der erfindungsgemäßen Gleitbeläge vorhanden sein, wie Zusatzstoffe zur Verbesserung der hydrophoben und antistatischen Eigenschaften oder der Witterungsbeständigkeit und der Kratzfestigkeit, wobei insbesondere Siliziumverbindungen, insbesondere anorganische Siliziumverbindungen wie Siliziumdioxid, Maleinsäureanhydrid, Ruß und Fluor bzw. fluorierte Kohlenwasserstoffe genannt werden können. Gegebenenfalls sind ebenfalls Pigmente wie TiO₂ vorhanden. Die geeignetsten Mengen derartiger Zusatzstoffe können leicht durch Routineversuche bestimmt werden, und jeder Zusatzstoff, der vorhanden ist, ist bevorzugt in einer Menge von 0,05 bis 3 Gew.-%, stärker bevorzugt von 0,1 bis 2 Gew.-%, vorhanden. Besonders bevorzugt sind erfindungsgemäße Copolymergemische, die ein Gleitmittel, ein Nukleierungsmittel, eine Siliziumverbindung und Maleinsäureanhydrid enthalten.

Falls der Ski für Hochleistungsanwendungen, beispielsweise den Rennlauf, vorgesehen ist, können auf übliche Art und Weise Spezialimprägnierungen aufgebracht werden, die vorzugsweise an Polypropylen anbinden können und die kurzfristig die hydrophoben und antistatischen Eigenschaften verbessern und die die Oberflächenhärte zusätzlich verstärken. Hier kann ein Gemisch aus fluoriertem Isopropanol und Wasser genannt werden.

Überraschend wurde gefunden, daß eine spezielle Mischung verschiedener Copolymere, wie vorstehend definiert, durch ein einfaches Extrusionsverfahren zu einer Folie verarbeitet werden kann, die sich in besonders hervorragender Weise als Gleitbelag für Wintersportgeräte und insbesondere für Skier uns Snowboards eignet. Der Belag ändert seine Härte in einem Temperaturbereich von + 20 bis - 20°C derart, daß er mit fallender Temperatur härter wird, ein Effekt, der bislang nur durch die Verwendung von Wachsen erzielt werden konnte.

Die erfindungsgemäße Gleitbeläge zeigen darüber hinaus eine ausgezeichnete Kerbschlagzähigkeit und Festigkeit, die mit der von Gleitbelägen auf der Basis von Polyethylen vergleichbar ist, zumindest soweit es die Anforderungen betrifft, die an Wintersportgeräte gestellt werden.

Die Copolymergemische zur Herstellung des erfindungsgemäßen Gleitbelags können auf übliche Art und Weise verarbeitet werden. Ein besonderer Vorteil der Copolymergemische liegt darin, daß sie durch übliche Extrusionsverfahren, beispielsweise durch Flachfolienextrusionsverfahren, zu Gleitbelägen geformt werden können. Die bei anderen Polymeren wie PE-UHMW erforderlichen Preß-Sinterverfahren sind erfindungsgemäß nicht notwendig. Die Verarbeitung kann daher erfindungsgemäß in üblichen Ein- und Doppelschneckenextrudern, insbesondere in Dreizonenschneckenextrudern mit Mischteil, vorzugsweise in kämmenden Dreizonendoppelschneckenextrudern mit Mischteil, erfolgen.

Die Extrusionswerkzeuge sind dem Fachmann bekannt, und hier können übliche Balken- oder Kleiderbügelwerkzeuge als Beispiele genannt werden. Zur Kalibrierung können übliche Kalander- oder Glättwälzanlagen verwendet werden, insbesondere sogenannte chill-roll-Anlagen.

Es ist erfindungsgemäß auch vorteilhaft, auf dem Gleitbelag eine Oberflächenstruktur aufzubringen, welche eine möglichst geringe Benetzbarkeit hervorruft. Überraschend wurde gefunden, daß bei dem erfindungsgemäßen Gleitbelag, auf dem auf übliche Art und Weise eine Oberflächenstruktur aufgebracht wurde, die Benetzbarkeit besonders stark verringert wird, so daß auch ohne Verwendung eines Wachses ein Lotuseffekt auftritt.

Ein weiterer erfindungsgemäßer Vorteil ergibt sich dabei dadurch, das Polypropylen einen sogenannten "Memoryeffekt" aufweist, der auftritt, wenn man die Oberflächenstruktur noch unterhalb der molekularen Einfriergrenze aufbringt. Durch den Memoryeffekt stellt sich die Oberflächenstruktur von selbst wieder her, falls sie durch mechanische Einwirkungen gering beschädigt wurde.

Die Oberflächenstruktur wird auf dem Gleitbelag auf gleiche Art und Weise angebracht, wie dies bei Skiern bekannt ist, beispielsweise durch die Verwendung von strukturierten Glättwalzen. Wie vorstehend erwähnt, ist es bevorzugt, daß die Oberflächenstruktur vor dem molekularen Einfrierpunkt auf den Gleitbelag aufgebracht wird.

Der erfindungsgemäße Gleitbelag weist in der Regel eine Stärke von 0,1 bis 10 mm, bevorzugt von 0,5 bis 5 mm, insbesondere von etwa 1 mm, auf.

Der erfindungsgemäße Gleitbelag kann auf übliche Art und Weise an Wintersportgeräten, insbesondere Skiern oder Snowboards, angebracht werden. Hierbei ist besonders bevorzugt, den Gleitbelag mit geeigneten Klebern, z.B. den gängigen hot melt-Klebern oder, mit einem schmelzklebenden Kunststoff, wie z.B. einem Polyamidharz oder einem Ethylenvinylacetatcopolymer oder deren Modifikationen, auf das Wintersportgerät aufzubringen. Der Gleitbelag kann aber auch auf andere bekannte Art und Weise mit dem Gerät verbunden werden. Vor dem Aufbringen kann das Wintersportgerät, insbesondere der Ski oder das Snowboard einer üblichen Vorbehandlung wie Bürsten, Sandstrahlen, Entfetten, Ätzen oder Beizen, unterworfen werden und der Gleitbelag kann einer üblichen Oberflächenbehandlung wie z.B. einer Coronabehandlung, Flammbehandlung, Primerbehandlung oder Ozondusche unterworfen werden.

Das folgende Beispiel erläutert die Erfindung.

### Beispiel

### Mischung I:

8000 g Exxon Mobil PP 7011 L1, 2000 g Dexplastomer Exact 0203, 100 g Hecoslip 103 PO (Gleitmittel) und 160 g Heconuk 484 PP.

### Mischung II:

8000 g Exxon Mobil PP 7011L1, 2000 g Dexplastomer Exact 0203, 100 g Hecoslip 103 PO und 160 g Heconuk 484 PP, sowie 100g Exxon Mobil Exxelor PO 1020 (Maleinsäure Anhydrid) und 40 g technisches Silizium - Pulver (SiO₂).

### Mischung lll:

3500 g Exxon Mobil PP 7011L1, 1500 g Dexplastomer Exact 0203, 100 g Hecoslip 114 PP und 50 g Hecoslip 103 PO.

Die Mischungen wurden jeweils 30 Minuten in einem üblichen Mischer gemischt. Anschließend wurde das Gemisch in einer Flachfolienextrusionsanlage mit einen Dreizonen-Einschneckenextruder der Marke Colin mit einer chill-roll-Anlage mit Glättwalzwerk zu einer 1 mm dicken Folie extrudiert. Die Oberflächenbehandlung erfolgte mit einer gängigen Ski-Steinschliffanlage der Marke Montana.

Anschließend wurden je Mischung kleine Probeplättchen (5cm x 5cm) mit Schleifpapier mit einer Korngröße von circa 8 µm und eine Schleifpaste mit einer Partikelgröße von circa 100 nm geschliffen, wodurch der Oberfläche des Gleitbelags ein Lotuseffekt verliehen wurde. Nach Auswaschen der Schleifrückstände erhielt man eine extrem gleitfähige Folienoberfläche, auf welcher Wassertropfen kugelförmig abrollten.

Beim Abkühlen der Folie zeigte sich eine starke Zunahme der Oberflächenhärte, beim Erwärmen eine Abnahme der Oberflächenhärte.

Die Folie der Mischungen 1 und 11 wurde durch Verwendung eines üblichen Klebers auf bekannte Art und Weise auf einen Ski und auf ein Snowboard aufgebracht. Daraufhin wurden diese Wintersportgeräte bei Naßschnee, kaltem und trockenem Schnee, sowie Kunstschnee Probe gefahren um einen qualitativen Gleittest in der Praxis durchzuführen. Als Referenz dienten Ski und Snowboards, welche mit den hochwertigsten kommerziell erhältlichen PE - UHMW Sinter - Belägen der Marke P-TEX ausgerüstet waren. Die Referenzbeläge wurden auf derselben oben genannten Steinschliffanlage mit dem selben Schliffbild versehen wie die zu Testenden, und professionell, wie für den Renngebrauch üblich, mit geeigneten Wachsen für die jeweilige Schneetemperatur präpariert.

Im Vergleich erschienen die Wintersportgeräte mit dem erfindungsgemäß neuen Belägen den Herkömmlichen in keinster Weise unterlegen. Im Gegenteil erschien besonders bei Naßschnee die Mischung II deutlich und die Mischung I leicht den Sinter - Belägen überlegen.

Im Folgenden werden die oben beschriebenen erfindungsgemäßen Beläge als FX SmartBase bezeichnet, wobei die Mischung I als FX SmartBase Basic und die Mischung II als FX SmartBase Si - Type bezeichnet wird.

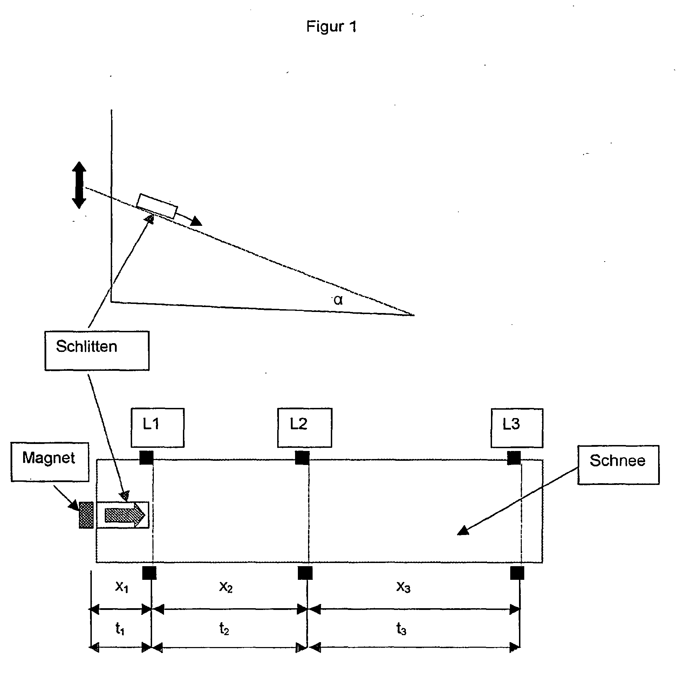

Zu quantitativen Analyse wurde folgender Versuchsaufbauverwendet, der einen objektiven Vergleich der Gleiteigenschaften der neuen erfindungsgemäßen Beläge FX SmartBase mit gewachsten Referenzbelägen ermöglicht. Der Aufbau ist in Figur 1 gezeigt.

Auf einer schiefen Ebene definierten Neigungswinkels a aus Schnee soll ein Schlitten mit dem zu testenden Belag als Lauffläche hinunterrutschen. Der Schlitten wird eingangs von einem Magneten gehalten. Löst dieser aus, so beginnt die Zeitnahme und der Schlitten durchläuft hierbei drei Lichtschranken (L1, L2, L3).

Hierbei wird auf der ersten Distanz x1 (5,5cm) vom Magneten bis L1 die erste Zeit t1 genommen. Daraufhin auf der zweiten Distanz x2(50cm) bis zur Lichtschranke L2 die zweite Zeit t2 und schließlich auf der dritten Distanz x3(50cm) bis zur Lichtschranke L3 die dritte Zeit t3.

Zur Steuerung wurde eine CPU der Firma Jetter Modell nano b verwendet.

Der Magnet war ein elektrischer Magnet der Firma IBS mit 24V Eingangsspannung. Als Lichtschranken wurden IR - Lichtschranken der Firma IDEC mit eine Reichweite von 80cm und einer Reaktionszeit von 1 ms gewählt.

Es wurden Belagproben mit einer Fläche von 80 cm² bei Warm- und Kaltschnee der FX SmartBase Basic und der FX SmartBase Si - Type mit dem Referenzbelag P-Tex, welcher auf die jeweiligen Schneebedingungen bezogen mit geeignetem Wachs präpariert wurde.

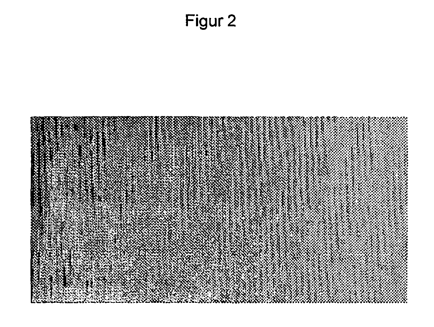

Alle Proben wurden auf einer Steinschliffmaschine der Firma Montana nach dem Crystal Glide Finish - Verfahren mit der gleichen allround Struktur versehen wie sie in Figur 2 gezeigt ist.

Für die Warm- beziehungsweise Naßschneetests wurde bei einer Schneetemperatur von -2°C und einer Lufttemperatur von +1,5°C das Wachs Eclipse EC1 High Fluor +8°...-3°C der Firma Star SkiWax verwendet.

Für die Kalt- und Trockenschneetests wurde bei einer Schneetemperatur von -6°C und einer Lufttemperatur von -4°C das Wachs Eclipse EC2 High Fluor 0°...-10°C der Firma Star SkiWax verwendet.

Auf die P-Tex Proben wurden das Wachs mit einem Wachsbügeleisen der Firma TOKO aufgebracht. Daraufhin wurden die Proben an Raumtemperatur zwei Stunden lang abgekühlt. Das Wachs wurde mit einer Abziehklinge der Firma TOKO abgeschält. Danach wurde mit einer Strukturbürste der Firma TOKO die Schliffstruktur wieder herausgebürstet.

Die FX SmartBase - Beläge wurden nicht gewachst.

Die Beläge wurden mit doppelseitigem Klebeband und Schraubverbindungen auf den Schlitten montiert.

Daraufhin wurde der Schlitten mit dem montierten Belag gewogen.
Als Waage diente eine grammgenaue Präzisionswaage der Firma Soehnle Modell 8048 cyber.

Dann wurde die Wanne auf deren Boden künstlicher Rasen zur besseren Haftung des Schnees lag mit Schnee gefüllt und mit einem Lineal abgezogen, so daß eine ebene Fläche entstand. Vor jedem Lauf wurde die Versuchspiste neu mit Schnee aufgeschüttet und abgezogen.

Danach wurde der Schlitten an der Führung aufgesetzt und ohne Bodenkontakt an den Magneten geführt.

Der Magnet wurde ausgelöst und die Messungen an den Lichtschranken erfolgten. Es wurden je Belag zehn Läufe durchgeführt und die resultierenden Zeiten aller zehn Läufe gemittelt.

Daraufhin wurden die gemittelten Zeiten miteinander verglichen und die Durchschnittsgeschwindigkeiten errechnet.

### Ergebnisse:

Alle Schlitten mit montiertem Belag hatten das gleiche Gewicht, welches 339 g betrug. Der Neigungswinkel a betrug bei allen versuchen 15°, was einem Gefälle von 25,88 % entspricht.

### 1. Versuchsreihe warmer und nasser Schnee (Schneetemperatur: -2°C, Lufttemperatur: +1,5°C

**FX Smartbase Basic**

| Messung | t [sec/100] | x [cm] |
|---|---|---|
| Mittelwert L1 | 34,6 | 5,5 |
| Mittelwert L2 | 95,4 | 55,5 |
| Mittelwert L3 | 128,8 | 105,5 |

**FX Smartbase Si - Type**

| Messung | t [sec/100] | x [cm] |
|---|---|---|
| Mittelwert L1 | 27,3 | 5,5 |
| Mittelwert L2 | 82,3 | 55,5 |
| Mittelwert L3 | 114,6 | 105,5 |

**P - Tex + EC1**

| Messung | t [sec/100] | x [cm] |
|---|---|---|
| Mittelwert L1 | 40,2 | 5,5 |
| Mittelwert L2 | 102,4 | 55,5 |
| Mittelwert L3 | 137,7 | 105,5 |

Geschwindigkeit: v = x/t
mit:
- v :: Mittlere Geschwindigkeit
- x :: Strecke
- t :: für x benötigte Zeit
ergibt sich:

| | |
|---|---|
| FX SmartBase Sl - Type : | v = 0,9206 m/s |
| FX SmartBase Basic : | v = 0,8190 m/s |
| P-Tex+EC1: | v = 0,7661 m/s |

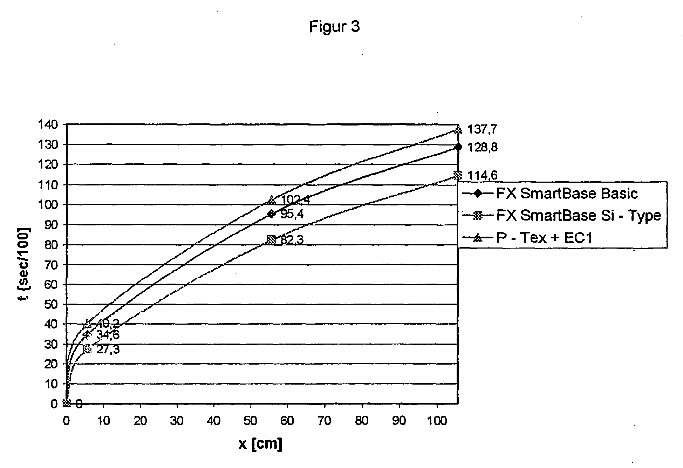

Somit ist auf einer Anfahrtsstrecke von 105,5 cm der FX SmartBase Basic um 6,90% und der FX SmartBase Si - Type um 20,16% bei dem getesteten Naßschnee schneller. Das Ergebnis ist in Figur 3 gezeigt.

### 2. Versuchsreihe kalter und trockener Schnee (Schneetemperatur: -6°C, Lufttemperatur: -4°C

**FX Smartbase Basic**

| Messung | t [sec/100] | x [cm] |
|---|---|---|
| Mittelwert L1 | 27,5 | 5,5 |
| Mittelwert L2 | 86,1 | 55,5 |
| Mittelwert L3 | 124,4 | 105,5 |

**FX Smartbase Si - Type**

| Messung | t [sec/100] | x [cm] |
|---|---|---|
| Mittelwert L1 | 27,2 | 5,5 |
| Mittelwert L2 | 83,6 | 55,5 |
| Mittelwert L3 | 119,7 | 105,5 |

**P - Tex + EC2**

| Messung | t [sec/100] | x [cm] |
|---|---|---|
| Mittelwert L1 | 27,2 | 5,5 |
| Mittelwert L2 | 87,2 | 55,5 |
| Mittelwert L3 | 128 | 105,5 |

Geschwindigkeit: v = x/t
mit:
- v:: Mittlere Geschwindigkeit
- x :: Strecke
- t :: für x benötigte Zeit
ergibt sich:

| | |
|---|---|
| FX SmartBase Sl - Type : | v = 0,8813 m/s |
| FX SmartBase Basic : | v = 0,8480 m/s |
| P-Tex+EC2 : | v = 0,8242 m/s |

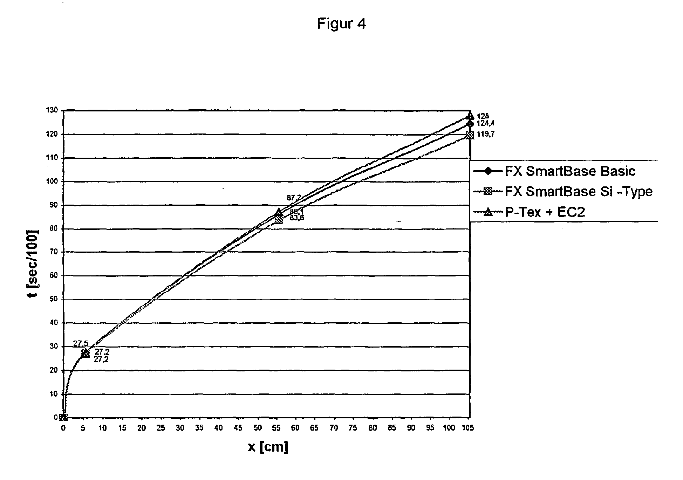

Somit ist auf einer Anfahrtsstrecke von 105,5 cm der FX SmartBase Basic um 2,88% und der FX SmartBase Si - Type um 6,93% bei dem getesteten Kaltschnee schneller. Das Ergebnis ist in Figur 4 dargestellt.

## Patentansprüche

1. Gleitbelag für ein Wintersportgerät, umfassend ein Gemisch aus einem Copolymer I und einem Copolymer II, wobei das Copolymer I ein Copolymer aus Propylen und zumindest einem weiteren Olefin ist, das zumindest 50% an Gerüstbausteinen enthält, die von Propylenmonomeren stammen, bezogen auf die Gesamtzahl der Gerüstbausteine, und das Copolymer II ein Copolymer aus Ethylen und zumindest einem weiteren Olefin ist, das zumindest 50% an Gerüstbausteinen aufweist, die von Ethylenmonomeren stammen, bezogen auf die Gesamtzahl der Gerüstbausteine.

2. Gleitbelag nach Anspruch 1, **dadurch gekennzeichnet, daß** das Copolymer I in einer Menge von 10 bis 90 Gew.-% und das Copolymer II in einer Menge von 10 bis 90 Gew.-%, jeweils bezogen auf das Gesamtgewicht von Copolymer I und Copolymer II vorhanden ist.

3. Gleitbelag nach Anspruch 1 oder 2, **dadurch gekennzeichnet, daß** das Gemisch weiterhin noch ein Gleitmittel umfaßt.

4. Gleitbelag nach Anspruch 3, **dadurch gekennzeichnet, daß** das Gleitmittel in einer Menge von 0,5 bis 30 Gew.-%, bezogen auf das Gesamtgewicht des Gemischs aus Copolymer I und Copolymer II enthalten ist.

5. Gleitbelag nach Anspruch 3 oder 4, **dadurch gekennzeichnet, daß** das Gleitmittel ausgewählt ist aus einer hochtemperaturstabilen Primär- oder Sekundärfettsäure, einem Carbonsäureester und Gemischen davon.

6. Gleitbelag nach einem der Ansprüche 1 bis 5, **dadurch gekennzeichnet, daß** das Gemisch weiterhin noch ein Nukleierungsmittel umfaßt.

7. Gleitbelag nach einem der Ansprüche 1 bis 5, **dadurch gekennzeichnet, daß** das Gemisch noch ein oder mehrere weitere Zusatzstoffe enthält, ausgewählt aus Antistatikadditiven, Additiven zur Verbesserung der hydrophoben Eigenschaften, Additiven zur Verbesserung der Witterungsbeständigkeit, Additiven zur Verbesserung der Kratzfestigkeit und Pigmenten.

8. Gleitbelag nach Anspruch 7, **dadurch gekennzeichnet, daß** das Gemisch eine Siliziumverbindung und/oder Maleinsäureanhydrid enthält.

9. Gleitbelag nach einem der Ansprüche 1 bis 8, **dadurch gekennzeichnet, daß** das Copolymer I ein Propylen-/Ethylencopolymer oder ein EPDM-Terpolymer ist.

10. Gleitbelag nach Anspruch 9, **dadurch gekennzeichnet, daß** das Copolymer I ein Propylen-/Ethylencopolymer ist, mit 70 bis 99% Gerüstbausteinen, die von Propylenmonomeren herstammen und mit 1 bis 30% Gerüstbausteinen, die von Ethylenmonomeren herstammen, jeweils bezogen auf die Gesamtzahl der Gerüstbausteine.

11. Gleitbelag nach einem der Ansprüche 1 bis 10, **dadurch gekennzeichnet, daß** das Copolymer II ein Copolymer aus Ethylen und einem höheren Olefin mit 4 bis 10 Kohlenstoffatomen oder ein Terpolymer aus Ethylen, einem Olefin mit 4 bis 10 Kohlenstoffatomen und einem Dien ist.

12. Gleitbelag nach Anspruch 11, **dadurch gekennzeichnet, daß** das Olefin mit 4 bis 10 Kohlenstoffatomen Octen ist.

13. Gleitbelag nach Anspruch 11, **dadurch gekennzeichnet, daß** das Copolymer II ein Ethylen-/Octencopolymer ist, das 70 bis 99% Gerüstbausteine enthält, die von Ethylen abgeleitet sind und 1 bis 30% Gerüstbausteine enthält, die von Octen abgeleitet sind, jeweils bezogen auf die Gesamtzahl der Gerüstbausteine.

14. Gleitbelag nach einem der Ansprüche 1 bis 13, **dadurch gekennzeichnet, daß** er eine Oberflächenstruktur aufweist, die vor dem molekularen Einfrierpunkt aufgebracht wurden.

15. Verfahren zur Herstellung eines Gleitbelags nach einem der Ansprüche 1 bis 14, **dadurch gekennzeichnet, daß** ein Gemisch wie in einem der Ansprüche 1 bis 14 definiert, mit einem Flachfolienextrusionsverfahren zu einer Folie extrudiert wird, auf der gegebenenfalls anschließend vor dem molekularen Einfrierpunkt eine Oberflächenstruktur aufgebracht wird.

16. Wintersportgerät, **dadurch gekennzeichnet, daß** es einen Gleitbelag nach einem der Ansprüche 1 bis 14 aufweist.

17. Wintersportgerät nach Anspruch 16, **dadurch gekennzeichnet, daß** es ein Ski oder ein Snowboard ist.

## Claims

1. A sliding coating for winter sports equipment, comprising a blend of a copolymer I and a copolymer II, the copolymer I being a copolymer of propylene and at least one further olefin which contains at least 50% of structural building blocks which originate from propylene monomers, based on the total number of structural building blocks, and the copolymer II being a copolymer of ethylene and at least one further olefin which comprises at least 50% of structural building blocks which originate from ethylene monomers, based on the total number of structural building blocks.

2. The sliding coating as claimed in claim 1, wherein the copolymer I is present in an amount of 10 to 90% by weight and the copolymer II in an amount of 10 to 90% by weight, based in each case on the total weight of copolymer I and copolymer II.

3. The sliding coating as claimed in claim 1 or 2, wherein the blend furthermore comprises a lubricant.

4. The sliding coating as claimed in claim 3, wherein the lubricant is contained in an amount of 0.5 to 30% by weight, based on the total weight of the blend of copolymer I and copolymer II.

5. The sliding coating as claimed in claim 3 or 4, wherein the lubricant is selected from a primary or secondary fatty acid stable at high temperatures, a carboxylic ester and mixtures thereof.

6. The sliding coating as claimed in any of claims 1 to 5, wherein the blend furthermore comprises a nucleating agent.

7. The sliding coating as claimed in any of claims 1 to 5, wherein the blend also contains one or more further additives selected from antistatic additives, additives for improving the hydrophobic properties, additives for improving the resistance to weathering, additives for improving the scratch resistance and pigments.

8. The sliding coating as claimed in claim 7, wherein the blend contains a silicon compound and/or maleic anhydride.

9. The sliding coating as claimed in any of claims 1 to 8, wherein the copolymer I is a propylene/ethylene copolymer or an EPDM terpolymer.

10. The sliding coating as claimed in claim 9, wherein the copolymer I is a propylene/ethylene copolymer comprising 70 to 99% of structural building blocks which originate from propylene monomers and comprising 1 to 30% of structural building blocks which originate from ethylene monomers, based in each case on the total number of structural building blocks.

11. The sliding coating as claimed in any of claims 1 to 10, wherein the copolymer II is a copolymer of ethylene and a higher olefin having 4 to 10 carbon atoms or a terpolymer of ethylene, an olefin having 4 to 10 carbon atoms and a diene.

12. The sliding coating as claimed in claim 11, wherein the olefin having 4 to 10 carbon atoms is octene.

13. The sliding coating as claimed in claim 11, wherein the copolymer II is an ethylene/octene copolymer which contains 70 to 99% of structural building blocks which are derived from ethylene, and contains 1 to 30% of structural building blocks which are derived from octene, based in each case on the total number of structural building blocks.

14. The sliding coating as claimed in any of claims 1 to 13, which has a surface structure which was applied before the molecular transition point.

15. A process for the production of a sliding coating as claimed in any of claims 1 to 14, wherein a blend as defined in any of claims 1 to 14 is extruded by a flat-film extrusion method to give a film, to which optionally a surface structure is then applied before the molecular transition point.

16. Winter sports equipment which has a sliding coating as claimed in any of claims 1 to 14.

17. Winter sports equipment as claimed in claim 16, which is a ski or a snowboard.

## Revendications

1. Couche glissante pour un article de sports d'hiver, comprenant un mélange fait d'un copolymère I et d'un copolymère II, le copolymère I étant un copolymère de propylène et d'au moins une oléfine supplémentaire, qui contient au moins 50 % d'éléments de squelette, qui proviennent de monomères du propylène, par rapport au nombre total des éléments de squelette, et le copolymère II étant un copolymère de l'éthylène et d'au moins une oléfine supplémentaire, qui présente au moins 50 % d'éléments de squelette, qui proviennent de monomères de l'éthylène, par rapport au nombre total des éléments de squelette.

2. Couche glissante selon la revendication 1, **caractérisée en ce que** le copolymère I est présent dans une quantité de 10 à 90 % en poids et **en ce que** le copolymère II est présent dans une quantité de 10 à 90 % en poids, à chaque fois par rapport au poids total du copolymère I et du copolymère II.

3. Couche glissante selon la revendication 1 ou 2, **caractérisée en ce que** le mélange contient en outre encore un lubrifiant.

4. Couche glissante selon la revendication 3, **caractérisée en ce que** le lubrifiant est contenu dans une quantité de 0,5 à 30 % en poids, par rapport au poids total du mélange en copolymère I et en copolymère II.

5. Couche glissante selon la revendication 3 ou 4, **caractérisée en ce que** le lubrifiant sélectionné est fait à partir d'un acide gras primaire ou secondaire, d'un ester d'acide carboxylique et de mélanges de ces derniers, stables à haute température.

6. Couche glissante selon l'une quelconque des revendications 1 à 5, **caractérisée en ce que** le mélange contient en outre encore un agent de nucléation.

7. Couche glissante selon l'une quelconque des revendications 1 à 5, **caractérisée en ce que** le mélange contient encore un ou plusieurs adjuvants supplémentaires, sélectionnés parmi les additifs antistatiques, des additifs en vue de l'amélioration des propriétés hydrophobes, des additifs en vue de l'amélioration de la résistance aux intempéries, des additifs en vue de l'amélioration de la résistance aux rayures et des pigments.

8. Couche glissante selon la revendication 7, **caractérisée en ce que** le mélange contient un composé du silicium et/ou l'anhydride de l'acide maléique.

9. Couche glissante selon l'une quelconque des revendications 1 à 8, **caractérisée en ce que** le copolymère I est un copolymère propylène-éthylène ou un terpolymère EPDM.

10. Couche glissante selon la revendication 9, **caractérisée en ce que** le copolymère I est un copolymère propylène-éthylène, ayant de 70 à 99 % d'éléments de squelette, qui proviennent de monomères du propylène, et ayant de 1 à 30 % d'éléments de squelette, qui proviennent de monomères de l'éthylène, à chaque fois, par rapport au nombre total des éléments de squelette.

11. Couche glissante selon l'une quelconque des revendications 1 à 10, **caractérisée en ce que** le copolymère II est un copolymère d'éthylène et d'une oléfine supérieure ayant de 4 à 10 atomes de carbone ou un terpolymère à partir de l'éthylène, d'une oléfine ayant de 4 à 10 atomes de carbone et d'un diène.

12. Couche glissante selon la revendication 11, **caractérisée en ce que** l'oléfine ayant de 4 à 10 atomes de carbone est l'octène.

13. Couche glissante selon la revendication 11, **caractérisée en ce que** le copolymère II est un copolymère éthylène-octène, qui contient de 70 à 99 % d'éléments de squelette, qui sont dérivés de l'éthylène, et de 1 à 30 % d'éléments de squelette, qui sont dérivés de l'octène, à chaque fois par rapport au nombre total des éléments de squelette.

14. Couche glissante selon l'une quelconque des revendications 1 à 13, **caractérisée en ce qu'**elle présente une structure superficielle, qui a été appliquée avant le point de congélation moléculaire.

15. Procédé en vue de la fabrication d'une couche glissante selon l'une quelconque des revendications 1 à 14, **caractérisé en ce qu'**un mélange est défini comme dans l'une des revendications 1 à 14, **en ce qu'**il est extrudé à l'aide d'un procédé d'extrusion à feuilles plates pour former une feuille, sur laquelle une structure superficielle est, le cas échéant, appliquée par la suite, avant le point de congélation moléculaire.

16. Article de sports d'hiver, **caractérisé en ce qu'**il présente une couche glissante selon l'une quelconque des revendications 1 à 14.

17. Article de sports d'hiver selon la revendication 16, **caractérisé en ce qu'**il s'agit d'un ski ou d'un snowboard.
